# EUROPÄISCHE PATENTSCHRIFT

(11) **EP 4 046 261 B1**
(45) Veröffentlichungstag und Bekanntmachung des Hinweises auf die Patenterteilung: **13.08.2025**
(21) Anmeldenummer: 20768028.1
(22) Anmeldetag: 07.09.2020
(51) Int. Cl.: H02K 15/14, H02K 11/30

(54) **VERFAHREN UND VORRICHTUNG ZUM HERSTELLEN EINES GEHÄUSES**
METHOD AND DEVICE FOR PRODUCING A HOUSING
PROCÉDÉ ET DISPOSITIF POUR LA FABRICATION D'UN BOÎTIER

(30) Priorität: 15.10.2019 DE 102019127797
(43) Veröffentlichungstag der Anmeldung: 24.08.2022
(73) Patentinhaber: PWO AG, 77704 Oberkirch (DE)
(72) Erfinder: SPINNER, Martin, 77871 Renchen (DE); BIGOTT, Tobias, 77704 Oberkirch (DE)
(74) Vertreter: Witte, Weller & Partner Patentanwälte mbB
(86) Internationale Anmeldenummer: PCT/EP2020/074921
(87) Internationale Veröffentlichungsnummer: WO 2021/073805

(56) Entgegenhaltungen:
- GB-A- 1 435 017
- JP-A- 2004 032 895
- US-A1- 2016 276 895

## Beschreibung

Die Erfindung betrifft ein Verfahren und eine Vorrichtung zum Herstellen eines Gehäuses für einen Elektromotor, das eine sich um eine Längsachse des Gehäuses erstreckende hülsenförmige Gehäusewand und einen Deckel aufweist, der innenseitig der Gehäusewand an einer vorbestimmten Position zwischen Längsenden der Gehäusewand quer zur Längsachse angeordnet ist.

Der Deckel kann dabei einen Lagerflansch für die Motorwelle aufweisen. Der Deckel befindet sich innenseitig der Gehäusewand, d.h. in dem von der Gehäusewand gebildeten Hohlraum an einer Position, die von beiden Längsenden der Gehäusewand beabstandet ist. Der Deckel unterteilt den Innenraum des Gehäuses dabei in einen ersten Teilraum, der zur Aufnahme des Stators des Elektromotors dient, der andere Teilraum nimmt die Steuerelektronik für den Motor auf.

Ein solches komplexes Gehäuse lässt sich mit herkömmlichen Umformverfahren wie Tiefziehen wegen des sich im Hohlraum des Gehäuses befindlichen Deckels nicht einteilig aus einer Platine fertigen. Denkbar ist die einteilige bzw. monolithische Fertigung eines solchen Gehäuses durch ein Druckgussverfahren. Ein im Druckgussverfahren hergestelltes Gehäuse hat jedoch den Nachteil eines hohen Kostenaufwands.

Es ist auch ein Konzept denkbar, bei dem ein solches komplexes Gehäuse aus jeweils einzeln in einem Umformverfahren aus jeweils einer Platine gefertigten Einzelteilen gefertigt wird, die nach ihrer Einzelfertigung miteinander zusammengesetzt werden. Beispielsweise könnten die hülsenförmige Gehäusewand und der Deckel separat aus jeweils einer Platine in einem Tiefziehprozess gefertigt werden, und der Deckel könnte anschließend in die vorbestimmten Position innerhalb der Gehäusewand eingesetzt werden. Die Fertigung von Einzelteilen mit je einem Werkzeug auf entsprechenden separaten Vorrichtungen ist jedoch hinsichtlich der Herstellungskosten ebenfalls nachteilig.

Das Dokument DE 676 341 A offenbart ein Verfahren zur Herstellung von Riemenscheiben aus Schmiedeeisen. Bei dem Verfahren werden die Tragscheibe und der zylindrische Teil der Riemenscheibe in einem Arbeitsgang durch Ziehen hergestellt und nach dem Ziehvorgang der Boden des Napfes von dem zylindrischen Teil abgeschnitten und in den zylindrischen Teil eingepresst. Dabei wird der Werkstoff zwischen zwei Schnittlinien durch Abstechen auf einer Drehbank entfernt, wonach die Tragscheibe in den zylindrischen Teil eingesetzt werden kann.

GB 1 435 017 A offenbart ein Verfahren zum Herstellen von Gehäusen für Elektromotoren. Das Gehäuse wird aus zwei Teilen hergestellt, die aus einem Metallblechstreifen gestanzt werden, wobei die Gehäuseschale um eine Endplatte gerollt wird, wobei die Seitenränder des Streifens zusammengefügt werden, nachdem der Streifen um die Endplatte gebogen worden ist.

US 2016/0276895 A1 offenbart:
Verfahren zum Herstellen eines Gehäuses für einen Elektromotor, das eine sich um eine Längsachse des Gehäuses erstreckende hülsenförmige Gehäusewand und einen Deckel aufweist, der innenseitig der Gehäusewand an einer vorbestimmten Position zwischen Längsenden der Gehäusewand quer zur Längsachse angeordnet ist, wobei ein erster Teilraum des Innenraums des Gehäuses zur Aufnahme eines Stators des Elektromotors und ein zweiter Teilraum des Innenraums des Gehäuses zur Aufnahme einer Steuerelektronik für den Elektromotor dient, und wobei der Deckel den ersten Teilraum und den zweiten Teilraum trennt, wobei das Verfahren umfasst:
Bereitstellen einer Vorstufe des Gehäuses, Verschieben des Deckels relativ zur Gehäusewand in Richtung der Längsachse von dem einen Längsende in die vorbestimmte Position.

Der Erfindung liegt daher die Aufgabe zugrunde, ein Verfahren zum Herstellen eines Gehäuses der eingangs genannten Art bereitzustellen, mit dem ein solches Gehäuse mit geringen Herstellungskosten gefertigt werden kann.

Der Erfindung liegt des Weiteren die Aufgabe zugrunde, eine Vorrichtung zum Herstellen eines solchen Gehäuses bereitzustellen.

Die Aufgabe wird durch ein Verfahren gemäß Patentanspruch 1 gelöst.

Das erfindungsgemäße Verfahren löst sich somit von dem Konzept, ein komplexes Gehäuse dadurch herzustellen, dass zunächst einzelne Teile des Gehäuses separat gefertigt und anschließend zusammengesetzt werden. Vielmehr wird zunächst eine Vorstufe des Gehäuses bereitgestellt, bei der der Deckel einteilig, d.h. monolithisch, mit der Gehäusewand ausgebildet und an einem der Längsenden der Gehäusewand angeordnet ist.

Die monolithische Vorstufe des Gehäuses lässt sich vorteilhafterweise durch herkömmliche Umformverfahren aus einer einzelnen Platine in einer Umformvorrichtung fertigen. Der Deckel befindet sich bei der Vorstufe des Gehäuses bereits an der richtigen Position in Richtung quer zur Längsachse, so dass im Unterschied zu einer separaten Fertigung von Deckel und Gehäusewand ein diesbezüglicher Positioniervorgang vorteilhafterweise nicht erforderlich ist. Der Deckel befindet sich jedoch noch nicht an der axialen vorbestimmten Position zwischen den Längsenden innerhalb der Gehäusewand. Daher sieht das erfindungsgemäße Verfahren weiterhin vor, nach Fertigung der Vorstufe des Gehäuses den Deckel von der Gehäusewand zu trennen und relativ zur Gehäusewand entlang der Längsachse der Gehäusewand von dem einen Längsende, an dem sich der Deckel in der Vorstufe des Gehäuses befindet, in die vorbestimmte Position (Sollposition) zu verschieben und somit zu positionieren. Nach dem Verschieben in die Sollposition wird der Deckel mit der Gehäusewand in der Sollposition gefügt.

Das erfindungsgemäße Verfahren zeichnet sich dadurch aus, dass das Trennen und Positionieren (Verschieben) des Deckels und gegebenenfalls die Fertigung der Vorstufe des Gehäuses sowie gegebenenfalls das Fügen in einer einzelnen Fertigungsanlage durchgeführt werden kann. Dabei kann das Fertigen der Vorstufe, das Trennen und Positionieren des Deckels sowie gegebenenfalls das Fügen im Pressentakt erfolgen. Dieselbe Fertigungsanlage kann weiterhin eine Fügestation umfassen.

Eine erfindungsgemäße Vorrichtung zum Durchführen des erfindungsgemäßen Verfahrens ist in Patentanspruch 8 angegeben.

Bevorzugt weist die Vorrichtung eine Fertigungseinrichtung zum Fertigen der Vorstufe des Gehäuses auf. Weiterhin weist die Vorrichtung eine Fügeeinrichtung zum Fügen des Deckels mit der Gehäusewand in der vorbestimmten Position auf.

Vorzugsweise wird das Fertigen der Vorstufe des Gehäuses und das Trennen und Verschieben des Deckels in verschiedenen Arbeitsstationen einer selben Fertigungsanlage durchgeführt. Die erfindungsgemäße Vorrichtung weist hierzu vorzugsweise eine Fertigungseinrichtung für die Fertigung der Vorstufe des Gehäuses auf.

Der Zeit- und Kostenaufwand der Herstellung des Gehäuses wird somit weiter verringert.

Bei dem erfindungsgemäßen Verfahren umfasst das Bereitstellen der Vorstufe des Gehäuses vorzugsweise ein einteiliges, d.h. monolithisches Formen der Gehäusewand und des Deckels aus einer selben Platine.

Als Formungsverfahren können alle herkömmlichen Umformverfahren, wie Tiefziehen, Stülpziehen, Einziehen, die in einem oder mehreren Umformstufen durchgeführt werden, eingesetzt werden.

Die erfindungsgemäße Vorrichtung kann hierzu eine Umformeinrichtung zum gemeinsamen einteiligen Formen des Deckels und der Gehäusewand aus einer selben Platine in einer oder mehreren Umformstufen aufweisen.

In einer weiteren bevorzugten Ausgestaltung des Verfahrens umfasst das Bereitstellen der Vorstufe des Gehäuses ein Formen des Deckels mit einer sich in Längsrichtung der Gehäusewand über eine Teillänge der Gehäusewand und in Umfangsrichtung um die Längsachse erstreckenden Schürze.

Der Vorteil dieser Maßnahme besteht darin, dass die Schürze eine flächige Anlage des Deckels an der Innenseite der Gehäusewand bietet und somit eine ausreichende Fläche für ein Fügen des Deckels mit der Gehäusewand bereitstellt.

Weiter vorzugsweise entspricht ein Außendurchmesser der Schürze dem Innendurchmesser der Gehäusewand.

Hierbei ist von Vorteil, dass die Schürze an der Innenseite der Gehäusewand ohne Luftspalt anliegt, so dass der Deckel über die Schürze nach dem Verschieben des Deckels in die Sollposition ohne Zusatzmaterial mit der Gehäusewand druckdicht gefügt werden kann. Der Außendurchmesser der Schürze kann an den Innendurchmesser der Gehäusewand dabei so angepasst werden, dass sich der Deckel in der Sollposition an der Innenseite der Gehäusewand von selbst hält.

In einer weiteren bevorzugten Ausgestaltung des Verfahrens wird der Deckel mit der Gehäusewand mechanisch, thermisch und/oder thermomechanisch gefügt.

Ein mechanisches Fügen kann, wie in einer weiteren Ausgestaltung optional vorgesehen ist, dadurch realisiert werden, dass die Gehäusewand mit Löchern der Schürze des Deckels in Eingriff gebracht wird, beispielsweise durch Eindrücken der Gehäusewand in die Löcher der Schürze. Ein weiterer Vorteil hierbei ist, dass der Deckel über den Eingriff der Gehäusewand in die Löcher der Schürze relativ zur Gehäusewand verdrehgesichert gehalten ist. Anstelle des Eindrückens der Gehäusewand in Löcher der Schürze des Deckels kann ein mechanisches Fügen auch vollständig ohne Löcher erfolgen, beispielsweise durch Quetschverbindungen wie Toxen, Clinchen usw.

Die Lochung der Schürze kann im Rahmen der Fertigung der Vorstufe des Gehäuses erfolgen. Die erfindungsgemäße Vorrichtung weist in einer bevorzugten Ausgestaltung entsprechend eine Lochungseinrichtung zum Lochen der Schürze des Deckels auf. In einer weiteren Ausgestaltung der Vorrichtung kann die Fügeeinrichtung dazu eingerichtet sein, die Gehäusewand mit den Löchern der Schürze in Eingriff zu bringen.

Ein thermisches Fügen kann beispielsweise ein Schweißen des Deckels an die Gehäusewand umfassen. Ein thermomechanisches Fügen kann eine Kombination aus thermischem und mechanischem Fügen aufweisen, beispielsweise kann das mechanische Fügen unter Wärmeeintrag durchgeführt werden.

Vorzugsweise wird das Fügen des Deckels mit der Gehäusewand in derselben Vorrichtung wie das Trennen und Verschieben des Deckels durchgeführt.

In einer weiteren bevorzugten Ausgestaltung des Verfahrens umfasst das Bereitstellen der Vorstufe des Gehäuses ein Ausbilden des Deckels als Lagerflansch.

Der Lagerflansch kann für die Aufnahme einer Welle ausgebildet sein. Die zentrale Öffnung des Lagerflansches kann beim einteiligen Formen der Gehäusewand und des Deckels eingebracht werden, d.h. bevor der Deckel von der Gehäusewand getrennt wird.

In einer weiteren bevorzugten Ausgestaltung der Vorrichtung weist die Trennvorrichtung einen Trennstempel, auf den die Gehäusewand mit Deckel aufsetzbar ist, und eine Trennmatrize auf, die zum Trennen des Deckels von der Gehäusewand ausgebildet ist.

Die Trennmatrize kann beispielsweise eine umlaufende Schneidkante aufweisen, die am Übergang des Deckels zur Gehäusewand angreift und die Gehäusewand vom Deckel durch Relativbewegung der Schneidmatrize und Trennstempel abschert oder abschneidet. Der Vorteil einer solchen Ausgestaltung der Trennvorrichtung besteht darin, dass sie in eine Presse auf einfache Weise integriert werden kann.

Die Positioniereinrichtung weist vorzugsweise einen Drücker auf, der zum Verschieben des Deckels relativ zur Gehäusewand ausgebildet ist.

Ein solcher Drücker lässt sich ebenfalls auf einfache Weise in eine Presse integrieren. Der Drücker kann beispielsweise von oben an dem Deckel angreifen und diesen nach dem Abtrennen des Deckels von der Gehäusewand relativ zur Gehäusewand in die Sollposition verschieben.

Mit dem erfindungsgemäßen Verfahren und der erfindungsgemäßen Vorrichtung lässt sich ein komplexes Gehäuse mit geringem Werkzeugeinsatz in einer einzelnen Vorrichtung bzw. Fertigungsanlage mit geringem Zeit- und Kostenaufwand aus einer einzelnen Platine gewichtsarm herstellen.

Unter einer "Platine" ist im Sinne der vorliegenden Erfindung eine Blechplatine mit durchgehend gleicher Werkstoffgüte, oder ein sogenanntes Tailored Blank, d.h. eine Blechplatine, die aus verschiedenen Werkstoffgüten und Blechdicken zusammengesetzt sein kann, oder eine walzplattierte Blechplatine zu verstehen. Das Material der Platine ist metallisch, beispielsweise Stahl oder Aluminium. Verbundwerkstoffe aus verschiedenen Metallen oder aus Metall und Kunststoff, die sich umformen lassen, kommen ebenso infrage.

Weitere Vorteile und Merkmale ergeben sich aus der nachfolgenden Beschreibung und der beigefügten Zeichnung.

Ausführungsbeispiele der Erfindung sind in der Zeichnung dargestellt und werden mit Bezug auf diese hiernach näher beschrieben. Es zeigen:
- Figur 1: ein Gehäuse in einem Schnitt entlang einer Längsachse des Gehäuses;
- Figur 2: eine Vorstufe des Gehäuses in Fig. 1 in einem Verfahrensstadium eines Verfahrens zum Herstellen des Gehäuses;
- Figur 2A: eine Platine, aus der die Vorstufe gefertigt wird;
- Figur 3: ein weiteres Verfahrensstadium des Verfahrens zum Herstellen des Gehäuses in Fig. 1;
- Figur 4: ein weiteres Verfahrensstadium des Verfahrens zum Herstellen des Gehäuses in Fig. 1;
- Figur 5: einen Längsschnitt durch einen Teil einer Arbeitsstation einer Vorrichtung zum Herstellen des Gehäuses in Fig. 1 in einer Arbeitsstellung;
- Figur 6: einen Längsschnitt durch die Arbeitsstation der Vorrichtung mit einem weiteren Teil der Arbeitstation in einer weiteren Arbeitsstellung;
- Figur 7: einen Längsschnitt durch die Arbeitsstation in Fig. 6 in einer weiteren Arbeitsstellung;
- Fig. 8: einen Längsschnitt durch die Arbeitsstation in Fig. 6 in einer weiteren Arbeitsstellung;
- Fig. 9: einen Längsschnitt durch die Arbeitsstation in Fig. 6 in einer weiteren Arbeitsstellung;
- Fig. 10: einen Längsschnitt durch die Arbeitsstation in Fig. 6 in einer weiteren Arbeitsstellung;
- Fig. 11: den Teil der Arbeitsstation in Fig. 5 in einer weiteren Arbeitsstellung; und
- Fig. 12: den Teil der Arbeitsstation in Fig. 5 in einer noch weiteren Arbeitsstellung.

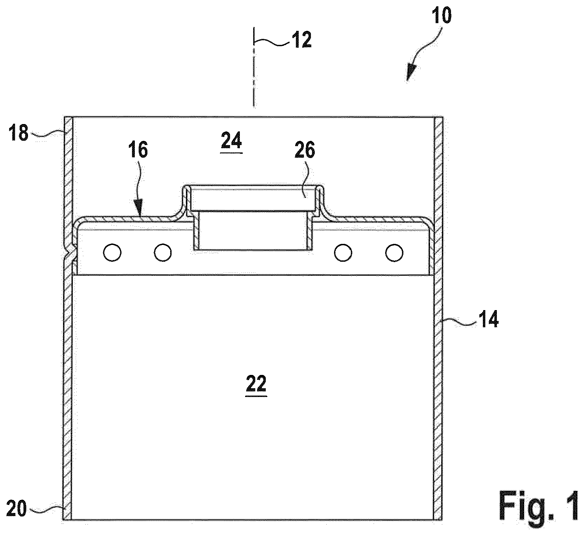

Fig. 1 zeigt ein mit dem allgemeinen Bezugszeichen 10 versehenes Gehäuse in einem Längsschnitt entlang einer Längsachse 12 des Gehäuses. Das Gehäuse 10 ist um die Längsachse 12 rotationssymmetrisch ausgebildet, wobei jedoch auch nicht rotationssymmetrische Geometrien möglich sind.

Das Gehäuse 10 weist eine sich um die Längsachse 12 erstreckende hülsenförmige Gehäusewand 14 und einen Deckel 16 auf. Das Gehäuse 10 ist somit mehrteilig ausgebildet. Im vorliegenden Fall ist das Gehäuse 10 ohne Beschränkung der Allgemeinheit aus zwei Teilen, und zwar aus der Gehäusewand 14 und dem Deckel 16 gebildet. Das Gehäuse 10 kann auch mehr als zwei Teile aufweisen. Wie später noch beschrieben wird, sind der Deckel 16 und die Gehäusewand 14 jedoch nicht als separate Einzelteile gefertigt worden, sondern sind aus einer Platine monolithisch hergestellt.

Der Deckel 16 ist an einer vorbestimmten Position zwischen einem ersten Längsende 18 und einem zweiten Längsende 16 innenseitig der Gehäusewand 14 an einer vorbestimmten Position angeordnet und erstreckt sich quer zur Längsachse 12 des Gehäuses. Die vorbestimmte Position des Deckels 16 ist von beiden Längsenden beabstandet. Der Deckel 16 ist mit der Gehäusewand 14 gefügt, wie später noch beschrieben wird.

Das Gehäuse 10 ist insgesamt aus Metallblech gefertigt, beispielsweise Stahlblech oder Aluminiumblech. Auch andere Werkstoffe, beispielsweise auch Hybridwerkstoffe aus Metall und Kunststoff, die sich in Umformverfahren formen lassen, kommen infrage. Die Wandstärke des Deckels 16 ist in Fig. 1 unterschiedlich zur Wandstärke der Gehäusewand gezeigt, jedoch versteht es sich, dass die Wandstärke von Deckel 16 und Gehäusewand 14 auch identisch sein können. Unterschiedliche Wandstärken können beispielsweise dadurch realisiert werden, dass als Ausgangsplatine ein sogenanntes Tailored Blank oder eine walzplattierte Platine verwendet wird.

Das Gehäuse 10 ist ein Gehäuse für einen Elektromotor, wobei ein erster Teilraum 22 des Innenraums des Gehäuses 10 zur Aufnahme eines Stators des Elektromotors und ein zweiter Teilraum 24 des Innenraums des Gehäuses 10 zur Aufnahme einer Steuerelektronik für den Motor dient. Der Deckel 16 trennt die beiden Bereiche 22 und 24. Der Deckel 16 kann wie gezeigt als Lagersitz ausgebildet sein, wobei der Deckel 16 in diesem Fall einen Lagerflansch 26 aufweist. Der Lagerflansch 26 kann zur Aufnahme einer Lagerwelle des Motors dienen.

Aufgrund der Anordnung des Deckels 16 innenseitig der Gehäusewand 14, d.h. im Innenraum des Gehäuses 10 zwischen den Längsenden 18 und 20 der Gehäusewand 14 kann das Gehäuse 10 als komplexes Gehäuse bezeichnet werden. Ein solches komplexes Gehäuse kann einteilig, d.h. monolithisch nicht als Umformteil aus einer einzelnen Platine gefertigt werden.

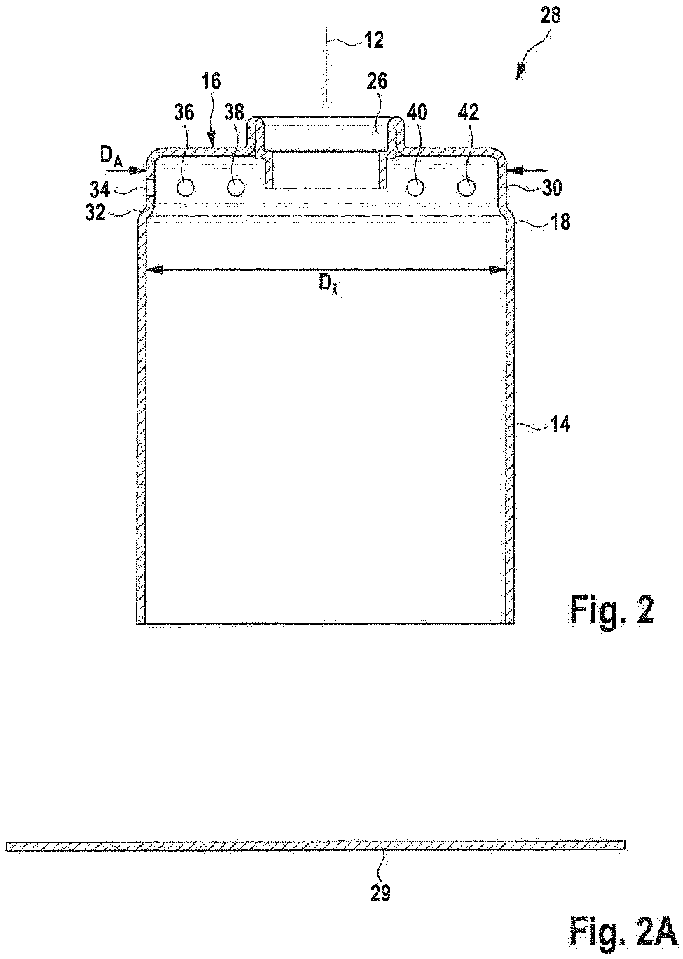

Mit Bezug auf die Fig. 2 bis 4 wird nachfolgend ein Verfahren zum Herstellen des Gehäuses 10 beschrieben.

Gemäß Fig. 2 wird eine Vorstufe 28 des Gehäuses 10 bereitgestellt. Bei der Vorstufe 28 des Gehäuses 10 ist der Deckel 16 einteilig mit der Gehäusewand 14 ausgebildet und an einem der Längsenden, hier dem Längsende 18, der Gehäusewand 14 angeordnet.

Die Vorstufe 28 lässt sich, da der Deckel 16 bei der Vorstufe 28 an einem der Längsenden der Gehäusewand 14 angeordnet ist, in einem herkömmlichen Umformverfahren durch gemeinsames Formen der Gehäusewand 14 und des Deckels 16 aus einer selben Platine einteilig, d.h. monolithisch fertigen. Fig. 2A zeigt (nicht maßstabsgetreu) eine Platine 29. Die Platine 29 kann monolithisch, ein Tailored Blank oder walzplattiert sein.

Im Rahmen der Formung der Vorstufe 28 des Gehäuses 10 wird der Deckel 16 mit einer sich in Längsrichtung der Gehäusewand 14 über eine Teillänge der Gehäusewand 14 und in Umfangsrichtung um die Längsachse 12 erstreckenden Schürze 30 geformt. Die Schürze 30 ist bei der Vorstufe 28 über einen Absatz 32 mit der Gehäusewand 14 einteilig, d.h. monolithisch verbunden. Die Schürze weist einen Außendurchmesser D_{A} auf, der dem Innendurchmesser D_{I} der Gehäusewand 14 entspricht. Der Außendurchmesser D_{A} der Schürze 30 ist somit kleiner als der Außendurchmesser der Gehäusewand 14.

Bei der Formung der Vorstufe 28 des Gehäuses 10 aus ein und derselben Platine wird auch der Lagerflansch 26 geformt. Um die Vorstufe 28 des Gehäuses 10 aus der Platine 29 zu formen, können die Umformvorgänge Tiefziehen, Stülpziehen, Stülpen angewendet werden, sowie die Bearbeitungsvorgänge Lochen (für die Durchgangsöffnung des Lagerflansches 26) sowie ein Durchstellen und ein Kalibrieren des Randes der Durchgangsöffnung angewendet werden.

Im Rahmen der Fertigung der Vorstufe 28 des Gehäuses 10 kann außerdem die Schürze 30 gelocht werden. In Fig. 2 sind beispielhaft Löcher 34, 36, 38, 40, 42 gezeigt. Die Löcher 34-42 können gleichmäßig am Umfang der Schürze 30 um die Längsachse 12 verteilt angeordnet sein. Die Funktion der Lochung der Schürze 30 wird später noch beschrieben.

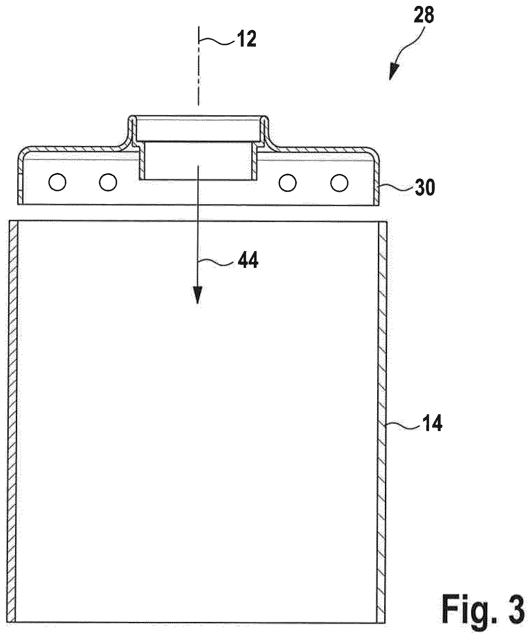

Fig. 3 zeigt ein Verfahrensstadium des Verfahrens zum Herstellen des Gehäuses 10, bei dem an der Vorstufe 28 des Gehäuses 10 in Fig. 2 der Deckel 16 von der Gehäusewand 14 getrennt worden ist. Die Trennung erfolgt an dem Absatz 32, d.h. dem Übergang des Deckels 16 zur Gehäusewand 14. Der Trennvorgang wird später noch detaillierter anhand eines Ausführungsbeispiels einer entsprechenden Vorrichtung beschrieben.

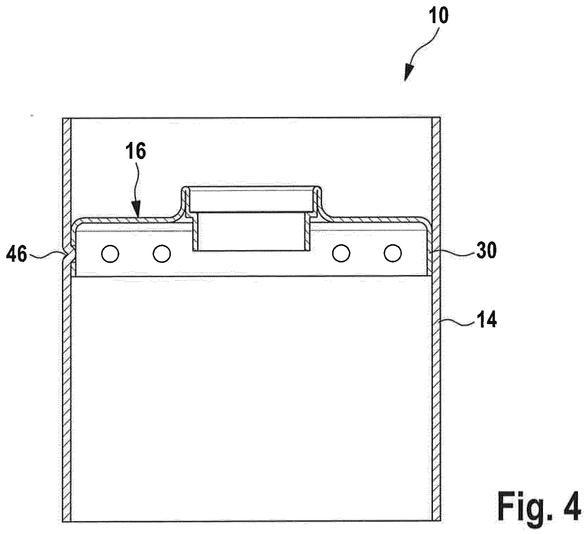

Nach dem Trennen des Deckels 16 von der Gehäusewand 14 wird der Deckel 16 gemäß einem Pfeil 44 relativ zur Gehäusewand 14 entlang der Längsachse 12 in die vorbestimmte Position, die in Fig. 1 und 4 gezeigt ist, verschoben. Aufgrund der o.g. Bemaßung des Außendurchmessers der Schürze 30 in Bezug auf den Innendurchmesser der Gehäusewand 14 liegt die Schürze 30 mit ihrer Außenseite eng an der Innenseite der Gehäusewand 14 an, wie in Fig. 4 gezeigt ist. Die Bemaßung des Außendurchmessers der Schürze 30 relativ zum Innendurchmesser der Gehäusewand 14 kann so sein, dass der Deckel 16 in der vorbestimmten Position gemäß Fig. 4 aufgrund eines entsprechenden Reibschlusses auch ohne Fügung mit der Gehäusewand 14 von selbst gehalten ist.

In einem nächsten Verfahrensstadium gemäß Fig. 4 wird der Deckel 16 mit der Gehäusewand 14 gefügt. Als Fügeverfahren können mechanische, thermomechanische oder thermische Fügeverfahren angewendet werden. Beispielsweise kann die Schürze 30 mit der Gehäusewand 14 verschweißt werden. Durch eine umlaufende Schweißung kann die Schürze 30 druckdicht mit der Gehäusewand 14 gefügt werden. Eine mechanische Fügung des Deckels 16 mit der Gehäusewand 14 kann darin bestehen, dass die Gehäusewand 14 mit der Lochung (Löcher 34-42 in Fig. 2) in Eingriff gebracht wird, wie an einer Stelle 46 veranschaulicht ist. Dies kann beispielsweise durch Eindrücken der Gehäusewand 14 in die Löcher 34-42 realisiert werden, was den Vorteil hat, dass das Gehäuse 10 nach außen druckdicht bleibt. Wenn eine druckdichte Ausgestaltung des Gehäuses 10 nicht erforderlich ist, kann die Gehäusewand 14 im Bereich der Lochung der Schürze 30 auch eingeschnitten und Material der Gehäusewand 14 in die Löcher 34-42 umgebogen werden.

Durch den Eingriff des Materials der Gehäusewand 14 in die Lochung der Schürze 30 ist der Deckel 16 bezüglich der Gehäusewand 14 verdrehgesichert.

Das mechanische Fügen des Deckels 16 mit der Gehäusewand 14 kann auch vollständig ohne Löcher erfolgen, beispielsweise durch Quetschverbindungen wie Toxen, Clinchen usw.

Ein thermomechanisches Fügen des Deckels 16 mit der Gehäusewand 14 ist ebenso denkbar.

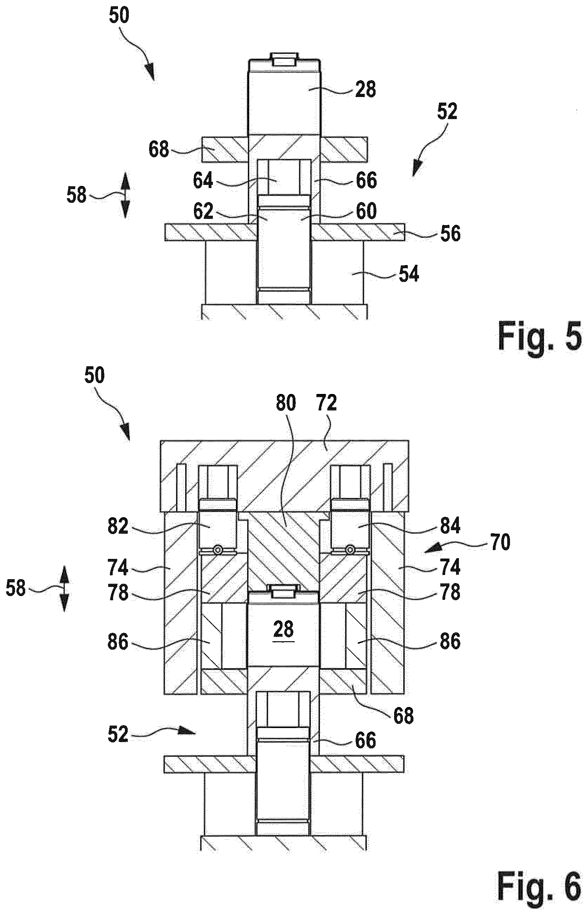

Die vorstehend genannten Vorgänge des Formens der Vorstufe 28 des Gehäuses 10 aus der Platine 29, des Trennens des Deckels 16 von der Gehäusewand 14, des Verschiebens des Deckels 16 in den Innenraum der Gehäusewand 14 und das Fügen des Deckels 16 mit der Gehäusewand 16 können insgesamt in einer selben Vorrichtung, die entsprechend mehrere Arbeitsstationen oder -stufen aufweist, durchgeführt werden. Dies wird nachfolgend mit Bezug auf Fig. 5 bis 10 näher beschrieben.

Fig. 5 und 6 zeigen eine Arbeitsstation 50 einer Vorrichtung zum Herstellen des Gehäuses 10 in Fig. 1. Die Vorrichtung wird nachfolgend in Bezug auf die Vorgänge des Trennens des Deckels 16 von der Gehäusewand 14 und des Positionierens des Deckels 16 relativ zur Gehäusewand 14 beschrieben.

Die gesamte Vorrichtung zur Herstellung des Gehäuses 10 kann außerdem eine Umformeinrichtung zum einteiligen Formen des Deckels 16 und der Gehäusewand 14 aus einer selben Platine in einem oder mehreren Umformstufen aufweisen, sowie weitere Arbeitsstationen (bspw. Lochen, Kalibrieren, Durchstellen), um die Vorstufe 28 des Gehäuses 10 gemäß Fig. 2 zu fertigen. Da solche Umformeinrichtungen mit mehreren Umformstufen und Bearbeitungseinrichtungen dem Fachmann geläufig sind, sind sie in der Zeichnung nicht gezeigt und werden hier nicht weiter beschrieben.

Fig. 5 zeigt ein Unterteil 52 der Arbeitsstation 50. Das Unterteil 52 weist ein feststehendes Podest bzw. eine Basis 54 auf. Das Unterteil 52 weist weiterhin einen beweglichen Tisch 56 auf, der gemäß einem Doppelpfeil 58 vertikal verfahrbar ist. Das Unterteil 52 weist weiterhin eine Gasdruck- oder Hydraulikfeder 60 mit einem Zylinder 62 und einem Kolben 64 auf. Der Kolben 64 ist ebenfalls gemäß dem Doppelpfeil 58 vertikal verfahrbar. Weiterhin weist das Unterteil 52 einen Trennstempel 66 auf, der ebenfalls gemäß dem Doppelpfeil 58 vertikal verfahrbar ist. Der Trennstempel 66 ist Teil einer Trenneinrichtung zum Trennen des Deckels 16 von der Gehäusewand 14. Das Unterteil 52 weist einen Hochbringer 68 auf, der gemäß dem Doppelpfeil 58 vertikal verfahrbar ist.

Die Vorrichtung 50 weist weiterhin ein Oberteil 70 auf, das in Fig. 6 zusammen mit dem Unterteil 52 gezeigt ist. Das Oberteil 70 weist einen Rahmen bzw. eine Brücke 72, 74 auf. Die Brücke 72, 74 ist vertikal verfahrbar (gemäß dem Doppelpfeil 58). Das Oberteil 70 weist weiterhin eine Schneidmatrize 78 auf, die mit dem Trennstempel 66 die Trenneinrichtung zum Trennen des Deckels 16 von der Gehäusewand 14 bildet. Die Schneidmatrize 74 ist gemäß dem Doppelpfeil 58 verfahrbar.

Das Oberteil 70 weist weiterhin einen brückenfesten Drücker oder Schieber 80 zum Verschieben des Deckels 16 relativ zur Gehäusewand 14 nach dem Trennen des Deckels 16 von der Gehäusewand 14 auf. In dem Oberteil 70 sind ferner Gasdruck- oder Hydraulikfedern 82, 84 sowie ein Distanzstück 86 angeordnet.

Gemäß Fig. 5 wird die Vorstufe 28 des Gehäuses 10 nach ihrer Fertigung in der Umformeinrichtung der Vorrichtung auf den Trennstempel 66 gestellt. Der Trennstempel 66 sitzt hierbei auf dem Kolben 64 der Gasdruck- oder Hydraulikfeder 60 auf, wobei der Kolben 64 in seiner ausgefahrenen Stellung ist. Der Hochbringer 68 befindet sich in seiner hochgefahrenen Position.

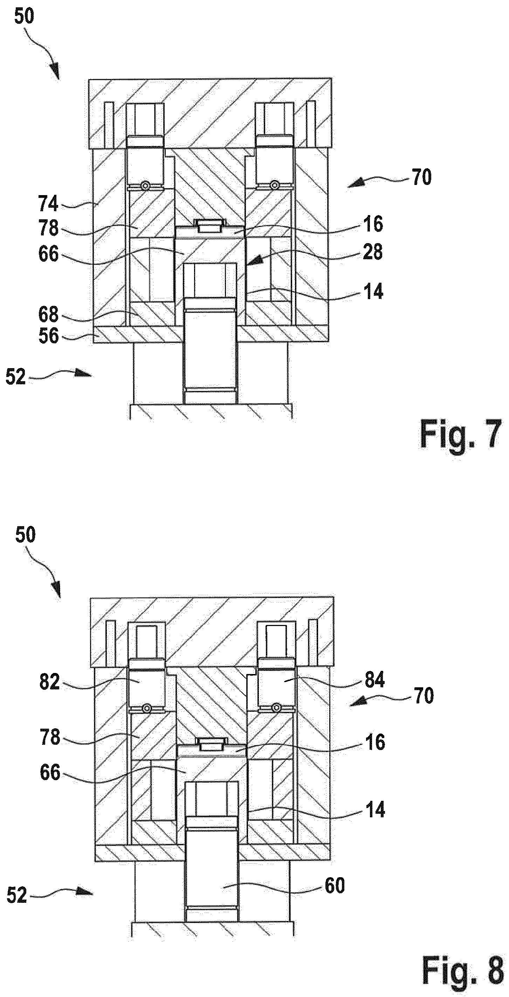

Gemäß Fig. 6 wird nun das Oberteil 70 der Vorrichtung 50 zu dem Unterteil 52 herangefahren. Durch weiteres Herabfahren des Oberteils 70 schiebt bzw. drückt der Drücker 80 die Vorstufe 28 des Gehäuses als Ganzes über den Trennstempel 66 in die in Fig. 7 gezeigte Stellung. Der Hochbringer 68 wird dabei über das Distanzstück 86 ebenfalls herabgedrückt. Die Schneidmatrize 78 wird ebenfalls nach unten verfahren.

In Fig. 7 sitzt die Vorstufe 28 nun vollständig auf dem Trennstempel 66 auf, wobei die Innenseite des Deckels 16 auf der Oberseite des Trennstempels 66 aufliegt. Der Hochbringer 68 und der Rahmen 74 liegen auf dem Tisch 56 auf.

Fig. 7 zeigt den Zeitpunkt unmittelbar vor dem Trennen des Deckels 16 von der Gehäusewand 14 der Vorstufe 28 des Gehäuses 10.

Fig. 8 zeigt den Trennvorgang zum Trennen des Deckels 16 von der Gehäusewand 14 der Vorstufe 28 des Gehäuses 10. Das Trennen des Deckels 16 von der Gehäusewand 14 erfolgt an dem Absatz 32 zwischen der Schürze 30 des Deckels 10 und dem Längsende 18 der Gehäusewand 14 durch eine Relativbewegung zwischen der Schneidmatrize 78 und dem Trennstempel 66.

Die Schneidmatrize 78 wird in Position gehalten und die oberen Gasdruck- oder Hydraulikfedern 82, 84 fahren ein.

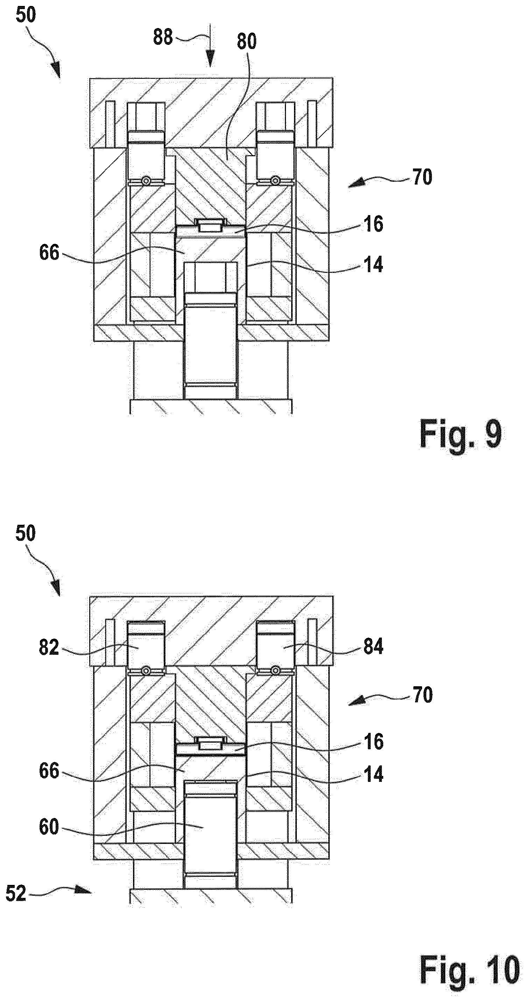

Gemäß Fig. 9 wird der Deckel 16 zusammen mit dem Trennstempel 66 durch weiteres Verfahren des Oberteils 70 nach unten über den Drücker 80 gemäß einem Pfeil 88 herabgedrückt. Die Gehäusewand 14 wird dabei ortsfest gehalten. Somit wird durch Verfahren des Oberteils 70 gemäß dem Pfeil 88 nach unten der Deckel 16 in den durch die Gehäusewand 14 definierten Innenraum verschoben, bis der Deckel 16 die axiale vorbestimmte Position relativ zur Gehäusewand 14 erreicht hat, wie in Fig. 10 gezeigt ist. Die Gasdruck- oder Hydraulikfeder 60 fährt während des Verschiebens des Deckels 16 relativ zur Gehäusewand 14 ein, ebenso die Gasdruck- oder Hydraulikfedern 82 und 84.

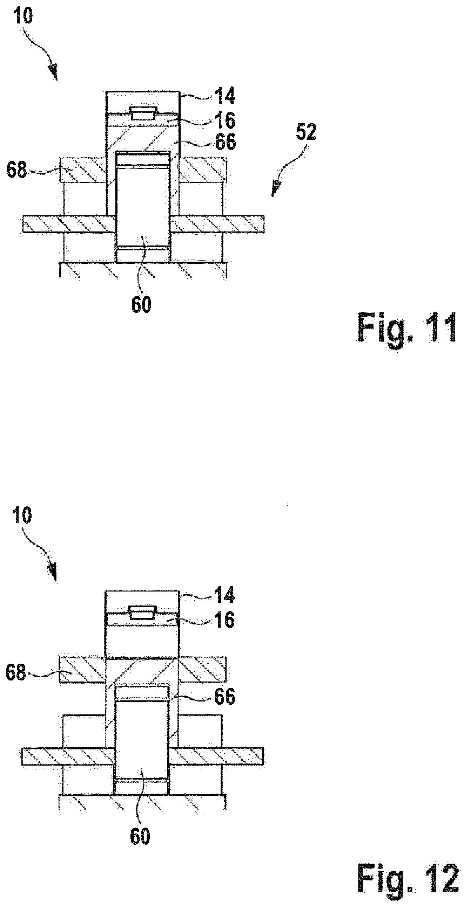

Der Trennstempel 66 befindet sich nun in der Unteren-Totpunkt-Stellung, ebenso das Oberteil 70 der Vorrichtung 50. Die Gasdruck- oder Hydraulikfeder 60 wird in der Stellung verriegelt. Anschließend wird das Oberteil 70 von dem Unterteil 52 weg verfahren, wie dies in Fig. 11 gezeigt ist.

Anschließend wird der Hochbringer 68 nach oben verfahren, um das Gehäuse 10 von dem Trennstempel 66 abzunehmen, wie in Fig. 12 gezeigt ist. Das Gehäuse 10 kann nun in einem weiteren Takt der Vorrichtung in eine Fügeeinrichtung der Vorrichtung (nicht gezeigt) überführt werden, in der der Deckel 16 mit der Gehäusewand 14 gefügt wird, wie oben mit Bezug auf Fig. 4 beschrieben wurde.

Das Fügen des Deckels 16 mit der Gehäusewand 14 kann jedoch auch in dem Verfahrensstadium gemäß Fig. 11 durchgeführt werden, d.h. bevor das Gehäuse 10 von dem Trennstempel 66 entfernt wird.

Das vorstehend beschriebene Trennen des Deckels 16 von der Gehäusewand 14 und das Verschieben des Deckels 16 relativ zur Gehäusewand 14 in das Innere der Gehäusewand 14 hinein kann im Pressentakt der Vorrichtung erfolgen. Dem Trenn- und Positioniervorgang gehen die Umformvorgänge, ebenfalls im Pressentakt voran. Dem Trenn- und Positioniervorgang kann in derselben Vorrichtung das Fügen des Deckels 16 mit der Gehäusewand nachfolgen. Somit lässt sich das Gehäuse 10 im Pressentakt auf einfache Weise und mit geringem Werkzeugaufwand herstellen.

## Patentansprüche

1. Verfahren zum Herstellen eines Gehäuses (10) für einen Elektromotor, das eine sich um eine Längsachse (12) des Gehäuses (10) erstreckende hülsenförmige Gehäusewand (14) und einen Deckel (16) aufweist, der innenseitig der Gehäusewand (14) an einer vorbestimmten Position zwischen Längsenden (18, 20) der Gehäusewand (14) quer zur Längsachse (12) angeordnet ist, wobei ein erster Teilraum (22) des Innenraums des Gehäuses zur Aufnahme eines Stators des Elektromotors und ein zweiter Teilraum (24) des Innenraums des Gehäuses zur Aufnahme einer Steuerelektronik für den Elektromotor dient, und wobei der Deckel (16) den ersten Teilraum (22) und den zweiten Teilraum (24) trennt, wobei das Verfahren umfasst:
Bereitstellen einer Vorstufe (28) des Gehäuses (10), bei der der Deckel (16) einteilig mit der Gehäusewand (14) ausgebildet und an einem der Längsenden (18, 20) der Gehäusewand (14) angeordnet ist,
Trennen des Deckels (16) von der Gehäusewand (14),
Verschieben des Deckels (16) relativ zur Gehäusewand (14) in Richtung der Längsachse (12) von dem einen Längsende (18) in die vorbestimmte Position, und Fügen des Deckels (16) mit der Gehäusewand (14) in der vorbestimmten Position.

2. Verfahren nach Anspruch 1, wobei das Bereitstellen der Vorstufe (28) des Gehäuses (10) ein gemeinsames einteiliges Formen der Gehäusewand (14) und des Deckels (16) aus einer selben Platine (29) umfasst, wobei vorzugsweise das Formen der Gehäusewand (14) und des Deckels (16) in derselben Vorrichtung wie das Trennen und Verschieben des Deckels (16) durchgeführt wird.

3. Verfahren nach einem der Ansprüche 1 oder 2, wobei das Bereitstellen der Vorstufe (28) des Gehäuses (10) ein Formen des Deckels (16) mit einer sich in Längsrichtung der Gehäusewand (14) über eine Teillänge der Gehäusewand (14) und in Umfangsrichtung um die Längsachse (12) erstreckenden Schürze (30) umfasst, wobei vorzugsweise ein Außendurchmesser (D_{A}) der Schürze (30) dem Innendurchmesser (D_{I}) der Gehäusewand (14) entspricht.

4. Verfahren nach Anspruch 3, wobei das Bereitstellen der Vorstufe (28) des Gehäuses (10) ein Lochen der Schürze (30) umfasst.

5. Verfahren nach einem der Ansprüche 1 bis 4, wobei das Fügen des Deckels (16) mit der Gehäusewand (14) ein mechanisches, thermisches oder thermomechanisches Fügen umfasst.

6. Verfahren nach Anspruch 4 oder 5, soweit auf Anspruch 4 rückbezogen, wobei das Fügen des Deckels (16) mit der Gehäusewand (14) ein in Eingriff Bringen der Gehäusewand (14) mit Löchern (34 - 42) der Schürze (30) des Deckels (16) umfasst.

7. Verfahren nach einem der Ansprüche 1 bis 6, wobei das Fügen des Deckels (16) mit der Gehäusewand (14) in derselben Vorrichtung wie das Trennen und Verschieben des Deckels (16) durchgeführt wird.

8. Vorrichtung zum Durchführen des Verfahrens nach nach Anspruch 1, die umfasst:
eine Trenneinrichtung (66, 78) zum Trennen des Deckels (16) von der Gehäusewand (14),
eine Positioniereinrichtung (80) zum Verschieben des Deckels (16) relativ zur Gehäusewand (14) in Richtung der Längsachse (12) in die vorbestimmte Position, wobei die Positioniereinrichtung dazu eingerichtet ist, den Deckel derart zu verschieben, dass
a) ein erster Teilraum des Innenraums des Gehäuses entsteht, der zur Aufnahme eines Stators eines Elektromotors dient, und dass
b) ein zweiter Teilraum des Innenraums des Gehäuses entsteht, der zur Aufnahme einer Steuerelektronik für den Elektromotor dient, wobei der Deckel die beiden Bereiche trennt, und
eine Fügeeinrichtung zum Fügen des Deckels (16) mit der Gehäusewand (14) in der vorbestimmten Position.

9. Vorrichtung nach Anspruch 8, weiterhin mit einer Fertigungseinrichtung zur Fertigung der Vorstufe (28) des Gehäuses (10).

10. Vorrichtung nach Anspruch 9, wobei die Fertigungseinrichtung eine Umformeinrichtung zum gemeinsamen einteiligen Formen des Deckels (16) und der Gehäusewand (14) aus einer selben Platine in einer oder mehreren Umformstufen aufweist.

11. Vorrichtung nach einem der Ansprüche 8 bis 10, wobei die Trennvorrichtung einen Trennstempel (66), auf den die Vorstufe (28) des Gehäuses (10) aufsetzbar ist, und eine Trennmatrize (78) aufweist.

12. Vorrichtung nach einem der Ansprüche 8 bis 11, wobei die Positioniereinrichtung einen Drücker (80) aufweist, der zum Verschieben des Deckels (16) relativ zur Gehäusewand (14) ausgebildet ist.

13. Vorrichtung nach Anspruch 9 oder einem der Ansprüche 10 bis 12, soweit auf Anspruch 9 rückbezogen, wobei die Fertigungseinrichtung eine Lochungseinrichtung zum Lochen einer Schürze (30) des Deckels (16) aufweist.

14. Vorrichtung nach Anspruch 8 und 13, wobei die Fügeeinrichtung dazu ausgelegt ist, die Gehäusewand mit Löchern der Schürze in Eingriff zu bringen.

## Claims

1. Method of manufacturing a housing (10) for an electric motor, which has a sleeve-shaped housing wall (14) extending about a longitudinal axis (12) of the housing (10) and a cover (16) disposed inside the housing wall (14) transverse to the longitudinal axis (12) at a predetermined position between longitudinal ends (18, 20) of the housing wall (14), wherein a first subspace (22) of the interior of the housing serves to accommodate a stator of the electric motor, and a second subspace (24) of the interior of the housing serves to accommodate a control electronics for the electric motor, and wherein the cover (16) separates the first subspace (22) and the second subspace (24), the method comprising:
providing a precursor (28) of the housing (10) in which the cover (16) is integrally formed with the housing wall (14) and is arranged at one of the longitudinal ends (18, 20) of the housing wall (14),
separating the cover (16) from the housing wall (14),
displacing the cover (16) relative to the housing wall (14) in the direction of the longitudinal axis (12) from the one longitudinal end (18) into the predetermined position, and
joining the cover (16) to the housing wall (14) in the predetermined position.

2. Method of claim 1, wherein providing the precursor (28) of the housing (10) comprises jointly integrally forming the housing wall (14) and the cover (16) from a same blank (29), preferably wherein the forming of the housing wall (14) and the cover (16) is performed in the same device as the separating and the displacing of the cover (16).

3. Method of any one of claims 1 or 2, wherein the providing of the precursor (28) of the housing (10) comprises forming the cover (16) with a skirt (30) extending in longitudinal direction of the housing wall (14) along a partial length of the housing wall (14) and circumferentially about the longitudinal axis (12), preferably wherein an outer diameter (D_{A}) of the skirt (30) corresponds to the inner diameter (D_{I}) of the housing wall (14).

4. Method of claim 3, wherein the providing of the precursor (28) of the housing (10) comprises perforating the skirt (30).

5. Method of any one of claims 1 to 4, wherein the joining of the cover (16) to the housing wall (14) comprises mechanical, thermal, or thermomechanical joining.

6. Method of claim 4 or 5, as far as dependent on claim 4, wherein the joining of the cover (16) to the housing wall (14) comprises engaging the housing wall (14) with holes (34 - 42) of the skirt (30) of the cover (16).

7. Method of any one of claims 1 to 6, wherein the joining of the cover (16) to the housing wall (14) is performed in the same device as the separating and the displacing of the cover (16).

8. Apparatus for performing the method according to claim 1, comprising:
a separating device (66, 78) for separating the cover (16) from the housing wall (14), and
a positioning device (80) for displacing the cover (16) relative to the housing wall (14) in the direction of the longitudinal axis (12) into the predetermined position, wherein the positioning device is arranged to displace the cover such that
a) a first subspace of the interior of the housing is formed, which serves to accommodate a stator of an electric motor, and that
b) a second subspace of the interior of the housing is formed, which serves to accommodate a control electronics for the electric motor, wherein the cover separates both regions; and
a joining device for joining the cover (16) to the housing wall (14) in the predetermined position.

9. Apparatus of claim 8, further comprising a manufacturing device for manufacturing the precursor (28) of the housing (10).

10. Apparatus of claim 9, wherein the manufacturing device comprises a forming device for jointly forming the cover (16) and the housing wall (14) in one piece from a same blank in one or more forming stages.

11. Apparatus of any one of claims 8 to 10, wherein the separating device comprises a separating plunger (66) onto which the precursor (28) of the housing (10) can be placed, and a separating die (78).

12. Apparatus of any one of claims 8 to 11, wherein the positioning device comprises a pusher (80) configured to displace the cover (16) relative to the housing wall (14).

13. Apparatus of claim 9 or any one of claims 10 to 12, as far as dependent on claim 9, wherein the manufacturing device comprises a perforating device for perforating a skirt (30) of the cover (16).

14. Apparatus of claim 8 and 13, wherein the joining device is adapted to engage the housing wall with holes of the skirt.

## Revendications

1. Procédé de fabrication d'un boîtier (10) pour un moteur électrique, qui présente une paroi de boîtier (14) en forme de douille s'étendant autour d'un axe longitudinal (12) du boîtier (10) et un couvercle (16), qui est disposé côté intérieur de la paroi de boîtier (14) sur une position prédéterminée entre des extrémités longitudinales (18, 20) de la paroi de boîtier (14) de manière transversale à l'axe longitudinal (12), dans lequel un premier espace partiel (22) de l'espace intérieur du boîtier sert à recevoir un stator du moteur électrique et un deuxième espace partiel (24) de l'espace intérieur de boîtier sert à recevoir une électronique de commande pour le moteur électrique, et dans lequel le couvercle (16) sépare le premier espace partiel (22) et le deuxième espace partiel (24), dans lequel le procédé comprend :
la mise à disposition d'un étage préliminaire (28) du boîtier (10), dans lequel le couvercle (16) est réalisé en une seule partie avec la paroi de boîtier (14) et est disposé sur une des extrémités longitudinales (18, 20) de la paroi de boîtier (14),
la séparation du couvercle (16) de la paroi de boîtier (14),
le déplacement du couvercle (16) par rapport à la paroi de boîtier (14) dans la direction de l'axe longitudinal (12) depuis une extrémité longitudinale (18) jusque dans la position prédéterminée, et
l'assemblage du couvercle (16) à la paroi de boîtier (14) dans la position prédéterminée.

2. Procédé selon la revendication 1, dans lequel la mise à disposition de l'étage préliminaire (28) du boîtier (10) comprend un façonnage commun en une seule partie de la paroi de boîtier (14) et du couvercle (16) à partir d'une même platine (29), dans lequel de préférence le façonnage de la paroi de boîtier (14) et du couvercle (16) est réalisé dans le même dispositif que la séparation et le déplacement du couvercle (16).

3. Procédé selon l'une quelconque des revendications 1 ou 2, dans lequel la mise à disposition de l'étage préliminaire (28) du boîtier (10) comprend un façonnage du couvercle (16) avec un tablier (30) s'étendant dans la direction longitudinale de la paroi de boîtier (14) sur une longueur partielle de la paroi de boîtier (14) et dans la direction périphérique autour de l'axe longitudinal (12), dans lequel de préférence un diamètre extérieur (D_{A}) du tablier (30) correspond au diamètre intérieur (Di) de la paroi de boîtier (14).

4. Procédé selon la revendication 3, dans lequel la mise à disposition de l'étage préliminaire (28) du boîtier (10) comprend un perçage du tablier (30).

5. Procédé selon l'une quelconque des revendications 1 à 4, dans lequel l'assemblage du couvercle (16) à la paroi de boîtier (14) comprend un assemblage mécanique, thermique ou thermomécanique.

6. Procédé selon la revendication 4 ou 5, dans la mesure où elles se rapportent à la revendication 4, dans lequel l'assemblage du couvercle (16) à la paroi de boîtier (14) comprend une mise en prise de la paroi de boîtier (14) avec des trous (34 - 42) du tablier (30) du couvercle (16).

7. Procédé selon l'une quelconque des revendications 1 à 6, dans lequel l'assemblage du couvercle (16) à la paroi de boîtier (14) est réalisé dans le même dispositif que la séparation et le déplacement du couvercle (16).

8. Dispositif de mise en œuvre du procédé selon la revendication 1, qui comprend :
un système de séparation (66, 78) pour séparer le couvercle (16) de la paroi de boîtier (14),
un système de positionnement (80) pour déplacer le couvercle (16) par rapport à la paroi de boîtier (14) dans la direction de l'axe longitudinal (12) dans la position prédéterminée, dans lequel le système de positionnement est configuré pour déplacer le couvercle de telle manière que
a) un premier espace partiel de l'espace intérieur du boîtier qui sert à recevoir un stator d'un moteur électrique est formé, et que
b) un deuxième espace partiel de l'espace intérieur du boîtier qui sert à recevoir une électronique de commande pour le moteur électrique est formé, dans lequel le couvercle sépare les deux zones, et un système d'assemblage pour assembler le couvercle (16) à la paroi de boîtier (14) dans la position prédéterminée.

9. Dispositif selon la revendication 8, avec par ailleurs un système de fabrication pour la fabrication de l'étage préliminaire (28) du boîtier (10).

10. Dispositif selon la revendication 9, dans lequel le système de fabrication présente un système de façonnage pour le façonnage commun en une seule partie du couvercle (16) et de la paroi de boîtier (14) à partir d'une même platine dans une ou plusieurs étapes de façonnage.

11. Dispositif selon l'une quelconque des revendications 8 à 10, dans lequel le dispositif de séparation présente un poinçon de séparation (66), sur lequel peut être posé l'étage préliminaire (28) du boîtier (10), et une matrice de séparation (78).

12. Dispositif selon l'une quelconque des revendications 8 à 11, dans lequel le système de positionnement présente un poussoir (80) qui est réalisé pour déplacer le couvercle (16) par rapport à la paroi de boîtier (14).

13. Dispositif selon la revendication 9 ou l'une quelconque des revendications 10 à 12, dans la mesure où elles se rapportent à la revendication 9, dans lequel le système de fabrication présente un système de perforation pour percer un tablier (30) du couvercle (16).

14. Dispositif selon les revendications 8 et 13, dans lequel le système d'assemblage est conçu pour amener en prise la paroi de boîtier avec des trous du tablier.
